# EUROPEAN PATENT APPLICATION

(11) **EP 0 693 850 A1**
(43) Date of publication of application: **24.01.1996**
(21) Application number: 95104836.2
(22) Date of filing: 31.03.1995
(51) Int. Cl.: H04M 19/08, H04M 1/64

(54) **Independent telephone power supply**

(30) Priority: 15.07.1994 US 275483
(71) Applicant: ROCKWELL INTERNATIONAL CORPORATION, Seal Beach, CA 90740-8250 (US)
(72) Inventor: Frankland, Robert W., Laguna Hills, California 92653 (US)
(74) Representative: Wagner, Karl H.

(57) **Abstract**

A power supply for operating a telephone answering system independent of the central office supply is disclosed. The power supply includes a voltage regulator coupled to a resistor selected to accommodate a variety of desired impedance, current and voltage levels. The voltage regulator and resistor assembly provides a variable current and voltage to a telephone handset coupled across a transformer arrangement to a modem and personal computer. The variable voltage allows the current level across the conventional carbon microphone telephone handset to vary in accordance with an input voice signal level. Consequently, changes in the input voice signal level can be measured and recorded in the computer.

## Description

### Background of the Invention

### 1. Field of the Invention

The present invention relates to independent power supplies and, more particularly, to a power supply for supplying power to a telephone set independent of the public switched telephone network (PSTN).

### 2. Description of Related Art

The complex and constantly changing network of innovative electronic equipment and capabilities has already expanded into the voice communications arena. Although voice communications may require the application and creation of new technologies and hardware, often these new technological capabilities require only the unconventional use and adaptation of conventional ideas and products. For example, by rerouting and reconnecting existing telephone lines and equipment, and coupling this equipment to electronic devices, the uses of a carbon or electret microphone telephone may be greatly expanded. Thus, non-conventional communications functions and capabilities may be achieved using a device as conventional as a standard telephone set.

More particularly, it is already known that voice messages may be digitally recorded, stored and retrieved by a personal computer (PC) through a modem arrangement. For example, voice transmission and reception may be performed by a microphone and speaker system coupled to a modem board. However, a less expensive and relatively uncomplicated alternative is to utilize existing microphone components inherent in a standard telephone set coupled to the modem to provide voice communications capabilities. That is, the modem/PC/telephone may be configured to serve a telephone answering function by recording and retrieving messages directly through the telephone handset.

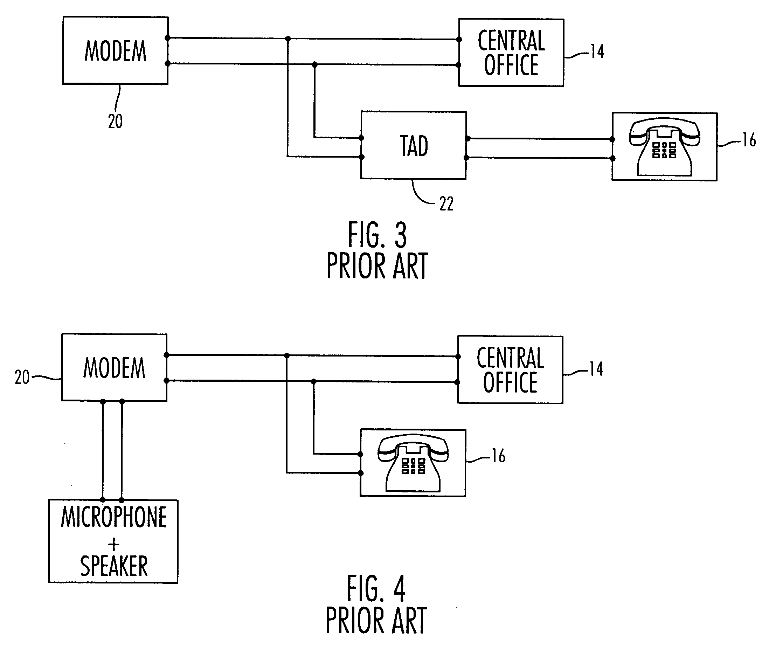

In contrast, in conventional telephone answering systems, such as that shown in Figure 3, a separate telephone answering device (TAD) 22 is typically coupled between a power source, i.e., the central office, 14 and the telephone set 16. Conventional telephones generally require line power supplied from the central office across the PSTN or PBX. The central office functions as a switching unit installed in the public telephone system, and includes necessary operating equipment and devices for terminating and interconnecting multiple telephone lines and trunks leading to subscribers' telephone sets.

The separate TAD 22 is used to answer incoming telephone calls if the telephone 16 is not manually answered. Typically, if the telephone handset is not picked up, and thus considered to be on-hook, the TAD 22 intervenes by intercepting the calls after a specified number of unanswered rings has been detected. To record and retrieve messages, the TAD basically operates like a tape recorder having a variety of tape playback functions. The telephone set itself, however, acts only as a conventional telephone and is not used for recording or retrieving messages. Thus, additional devices such as the TAD are required.

In other prior art arrangements, such as that shown in Figure 4, incoming and outgoing messages may be recorded by a PC through a modem, without an independent answering device connection. However, to perform the function of a TAD, a separate microphone and speaker are still required in lieu of the TAD.

To reduce costs and complexity of the PC-based TAD, it has been found that telephone answering and playback functions may be provided by a data modem coupled to a PC in accordance with a special arrangement through which the telephone handset itself functions as both a microphone and speaker. By utilizing existing microphone components in the telephone handset, the conventional telephone can be used both as a microphone into which a user may record an outgoing message or greeting, and as a speaker to play back recorded messages.

However, to use a telephone handset as a microphone or speaker independent of the PSTN and, therefore, the central office, the telephone handset must be disconnected from the central office supply line. Accordingly, the telephone set must be powered by another complementary source. Thus, such an arrangement requires a power source separate from that supplied by the central office. The desired power supply must provide a sufficient voltage to independently operate the telephone, yet display voltage/current characteristics similar to the central office supply.

For example, the central office typically provides 48 volts (V) of DC power through two 200 ohm resistors and two hybrid transformer coils. The 400 ohm total source resistance limits the loop current to 120 milliamps (mA). Thus, when a user picks up the telephone handset, the central office determines that a call is being made or has been answered, i.e., the telephone set is off-hook. Accordingly, a 120 mA current is produced and provided to the telephone set. The central office then remains out of the call loop until the telephone handset is later replaced. At that time, current ceases to flow through the telephone lines to the handset.

In addition, for adequate telephone set performance, the power supply must have high AC source impedance and low ripple voltage to support and transmit voice data. For example, in the central office supply, the transformer coils introduce a necessary AC impedance to the voltage source, which would otherwise have virtually no AC impedance. Conventional DC voltage sources, however, do not meet these requirements.

In the past, regulated DC voltage sources have been used to provide power independent of the line power, but have been found to be inadequate for several reasons. First, because regulated DC supplies have very low AC output impedance, the voice signal across the telephone handset may be short circuited. Consequently, because both the transmitted and received voice signals are superimposed on the DC supply current, the signals are severely attenuated by the low AC output impedance. Second, due to the 60 Hz cycling of standard 120 V AC wall power supplies (such as that provided by conventional residential sockets), a significant amount of noise is generated. This noise is typically audible through the telephone handset speaker.

Some digital loads which are tolerant of voltage supply ripple also generate noise which tends to further modulate the supply. In addition, it has been found that conventional external power sources produce an undesirable ripple voltage. As a result, a buzzing or humming sound is often generated across the telephone handset. However, even if the ripple voltage is reduced by a factor of 10, undesirable noise is often still audible on conventional handsets. Consequently, elaborate filtering schemes may be necessary to eliminate the audible noise in the telephone handset. Such filtering, however, requires additional hardware and substantial cost than is practicable.

### SUMMARY OF THE DISCLOSURE

Accordingly, it is an object of the present invention to provide an independent power supply for a telephone recording and answering system which can be used as a conventional telephone as well as a telephone answering device, obviating, for practical purposes, the above-mentioned limitations, particularly in a manner requiring a relatively uncomplicated arrangement.

These and other objects are accomplished, according to an embodiment of the present invention, by a power supply arrangement which supplies a high AC output impedance, low DC impedance, and minimizes ripple voltage. In preferred embodiments, the power supply is coupled to or carried within a telephone set which may operate as a conventional telephone or as a TAD having an internal microphone/speaker assembly when the telephone set is coupled to a standard modem and PC. An application program installed in the PC enables the operator to manually or automatically determine when and if the telephone set is to be used as a standard telephone or as a telephone answering device.

A preferred power supply embodiment of the present invention is configured as a constant current source and includes an adjustable voltage regulator coupled to a resistor. The voltage regulator arrangement is coupled to a transformer. An audio signal input into the receiver portion of the telephone handset causes the carbon granules in the microphone within the telephone handset to vibrate, thus providing a variable resistor having a resistance that varies according to the varying current. Consequently, a corresponding variable voltage is produced across the transformer legs such that the voice signal received by the modem and PC is audible and undistorted. Such an arrangement has been found to sustain and audibly maintain the desired voice signal, while substantially eliminating the audible ripple voltage.

### BRIEF DESCRIPTION OF THE DRAWINGS

The detailed description will be made with reference to the accompanying drawings, wherein like numerals designate corresponding parts in the several figures.

Figure 1 is a block diagram of a power supply according to an embodiment of the present invention.

Figure 2 is a detailed block diagram of a power supply switching arrangement of the embodiment in Figure 1.

Figure 3 is a diagram of a prior art power supply configuration.

Figure 4 is a diagram of another prior art power supply arrangement.

### DETAILED DESCRIPTION OF THE PREFERRED EMBODIMENTS

The following detailed description is not to be taken in a limiting sense, but is made merely for the purpose of illustrating the general principles of embodiments of the invention. The scope of the invention is best defined by the appended claims.

Embodiments of the invention have been found to provide high quality voice communication capabilities through a standard telephone set independent of a central office supply. Power supply embodiments of the present invention are suitable for providing an independent power source to a conventional telephone for use as a microphone and speaker system embodied within a telephone answering device. According to embodiments of the present invention, the telephone set may operate as a conventional telephone which may receive and transmit telephone calls, or the telephone set may function as an answering machine through which messages may be recorded and retrieved in conjunction with a modem and PC assembly.

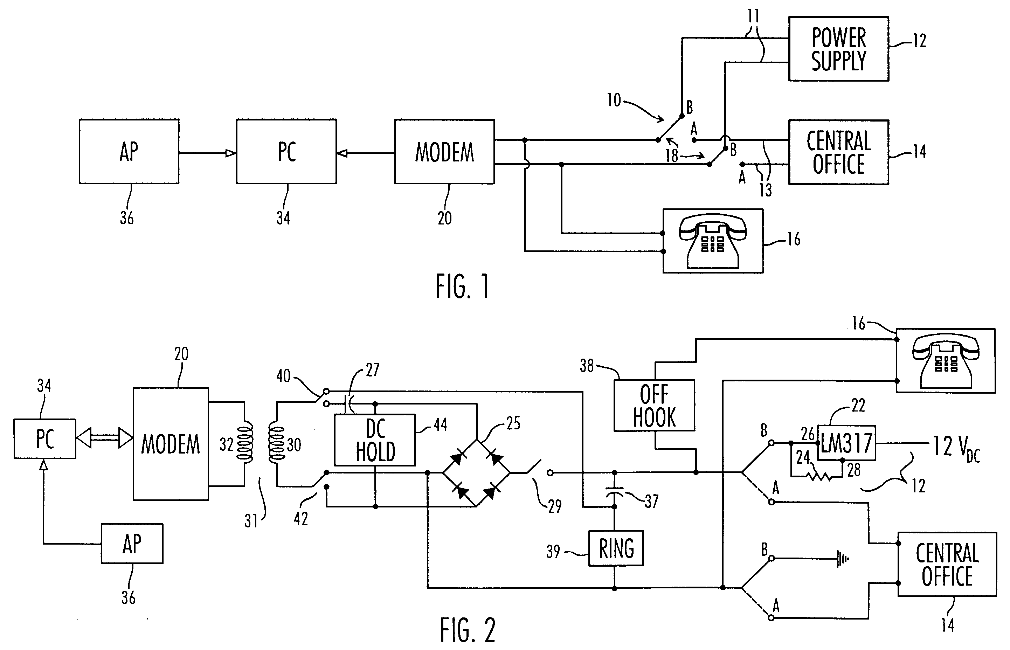

An independent power supply for a telephone answering system in accordance with a preferred embodiment of the present invention is indicated generally at 10 in Figure 1. The telephone arrangement includes a telephone set 16 coupled to a PC 34, a modem 20, and a dual-pole relay 18 which switches the telephone connection between two power sources. Depending upon the particular switching arrangement in accordance with a compatible hardware or software controller installed in the attached PC 24, the telephone set may be coupled to the central office 14 or to an independent power supply embodiment 12 of the present invention. It will be recognized that in other embodiments of the invention, the power supply 12 and switching arrangement 18 may also be implemented within the casing of the modem.

When the telephone set 16 is connected to the central office 14, traditional telephone functions are provided by the telephone set in which outgoing or incoming telephone calls may be transmitted or received, respectively, across the PSTN or PBX. When the telephone connection is switched to the independent power supply 12, the telephone set may perform the role of a TAD without additional equipment typically associated with a TAD. The telephone set will perform the role of a TAD when used in conjunction with the AP 36, PC 34, modem 20, and the independent power supply 12. The function of the telephone set in the TAD mode is to provide a microphone to record the greeting message and speaker to play back messages.

However, as discussed in greater detail below, for adequate telephone set performance independent of the central office, the independent power supply must have characteristics similar to those of the central office supply. That is, high AC source impedance and low ripple voltage are necessary to achieve an undistorted, audible voice signal.

Referring to Figures 1 and 2, the dual pole relay 18 moves between two positions. The relay 18 operates such that both switches move together, similar to the parallel legs of switching train tracks. In preferred embodiments, the movement of the switches 18 is controlled by an application program 36, or other compatible software or hardware, installed and activated in the PC 34. As described in more detail below, the switches 18 are preferably manually or automatically controlled according to a commanded mode of operation designated by the application program 36. As indicated in Figure 1, when the switches 18 are in position A, the telephone set 16 is connected across lines 13 to the central office supply 14. Consequently, the telephone set 16 functions as a conventional telephone in which line power is supplied to the telephone set when the handset is off-hook. When the switches 18 are moved to position B in response to a command by the application program 36 within the computer 34, the telephone set 16 is coupled to the power supply 12, across lines 11.

The modem 20 may comprise a stand-alone modem coupled to the PC across a serials port communications interface such as an RS232 connector. Power to the modem may be provided externally through a conventional wall socket or other wall mount adapter (not shown). The modem may also be connected internally within the PC. The modem power supply is not affected by and does not affect the telephone power supply.

Figure 2 shows in greater detail the telephone set and power supply arrangement of the preferred embodiment of Figure 1. The telephone system is shown connected, via switches 18, to the independent power supply 12. In the illustrated embodiment, the power supply 12 includes an adjustable voltage regulator 22 and a resistor 24 coupled between the adjustment and output pins 26 and 28, respectively, of the regulator 22. The resistor 24 and voltage regulator 22 arrangement serves to regulate the output current at the adjustment pin 26 of the regulator, providing constant current through the telephone, thereby causing the voltage output across the telephone handset to vary. Thus, the level of the variable voltage across the telephone handset depends upon the voice signal received on the handset.

The voltage regulator acts as a constant current regulator. The constant current which passes through the telephone generates a DC voltage across the telephone which is proportional with its resistance. All of the DC current then returns to ground via relay 18 at switching side B since the modem off-hook relay is open, breaking the DC path to the holding circuit 44.

In contrast, if the regulator is configured as a voltage regulator, a fixed voltage would be output across the telephone handset. The fixed voltage would, in turn, produce a fixed current across the internal carbon microphone of the handset, which would consequently clamp the input voice signal. As a result, regardless of the loudness of the voice signal, no speech would be heard through the telephone handset.

In preferred embodiments, the transformer ratio is one-to-one between transformer leg 30 and transformer leg 32. Consequently, the varying voltage and current levels across transformer leg 30 are reflected in transformer leg 32. The variable voltage representing the varying voice signal can then be processed by the modem and PC assembly.

Preferably, the adjustable voltage regulator is an LM317 regulator manufactured by National Semiconductor, Inc. The LM317 is a standard programmable band gap voltage regulator that generates an output DC voltage corresponding to an input voltage at the input pin of the regulator. A fixed output current is supplied at the adjustment pin 26. Consequently, as described above, the output voltage is variable depending upon the value of the resistor 24 coupled between the output and adjustment pins of the regulator.

Furthermore, by adjusting the value of the resistor coupled to the voltage regulator, the output current from the voltage regulator/resistor assembly can be controlled to provide a particular operating voltage to the telephone handset. For example, in accordance with the requirements of dual tone multi-frequency (DTMF) telephone systems, at least a 6 V power supply is necessary to operate the conventional telephone set and the internal DTMF chip. Thus, if the telephone handset and transformer leg arrangement comprises a typical 300 ohm impedance, and if a standard wall line voltage of 12 V is input into the voltage regulator, a 20 mA current source will be output from the voltage regulator to produce the necessary 6 V drop across the telephone handset.

If the telephone and transformer arrangement comprises a 600 ohm impedance, and if a 20 mA current is supplied to the 600 ohm assembly, a 12 V drop would be required for proper operation of the telephone handset. However, if the wall line voltage is limited to 12 V, the resultant 12 V supply may be insufficient to compensate for any ripple voltage. That is, the 12 V supply would be inadequate to provide the necessary minimum 12 V due to the effective voltage loss attributable to the ripple in the supply. Accordingly, by simply implementing a different resistor which would produce a smaller output current, e.g., 15 mA, the resultant required voltage drop across the telephone handset would be limited to 9 V, which can be accommodated by the conventional 12 V wall line.

Referring to Fig. 2, in a typical modem data/fax connection, the off-hook relay 29 closes when the telephone call is received by the telephone set. The polarity of the DC voltage on the phone line varies in different parts of the circuit. Accordingly, a bridge rectifer 25 is provided to produce a DC voltage of known polarity to operate the holding circuit 44 which will not function unless the proper polarity is attained. The DC resistance of the holding circuit 44 is necessarily very low, while the AC impedance is high to cause all of the AC signal from the calling modem to pass through the transformer. Conversely, because the transformer 31 is easily saturated by the DC current, the AC signal is coupled to the transformer 31 through a capacitor 27 (Fig. 2) to prevent DC current from flowing into the transformer.

For conventional voice recording, speaking into the telephone receiver mouthpiece generates an AC voltage across the telephone set. Since a current source has a very high impedance, the voice signal passes through the capacitor 37 and transformer 31, before returning to the telephone. However, since DC current does not pass through the bridge diodes 25, the diodes present a high impedance to AC signals of small amplitude. Upon playback, voice messages stored on the PC hard drive, or other storage media, pass through the modem for digital-to-analog conversion. The analog signal is then transmitted through the transformer 31 and capacitor 37 to the telephone, and is audible in the receiver earpiece.

In addition, the capacitor 37, illustrated in Figure 2, is coupled to the telephone set 16 and voltage regulator assembly 12 to filter some of the ripple voltage supplied to the telephone handset, and to draw current into a ring detect circuit 39 and DC holding circuit 44. The capacitor specifications must be determined in light of the overall impedance requirements.

In operation, according to a preferred embodiment, an application program 36 is first installed in the PC 34 on one or more floppy disks, or internally stored in the PC. Preferably, the application program is operable in a variety of modes such as manual or automatic. For example, in a manual mode embodiment, the user manually indicates whether the telephone set 16 is to be taken off-line, i.e., disconnected, from the central office 14. Preferably, the application software 36 first prompts the user to indicate whether the telephone system is to be maintained in a stand-by state during which the telephone set functions as a conventional telephone until a certain number of incoming rings is received and detected by the ring detect circuit 39, as illustrated in Figure 2. Thereupon, after the designated rings have occurred, the program causes the relay 18 to disconnect the central office line 14 and redirect the connection to the independent power supply.

In an alternate automatic mode, the PC/modem system automatically determines whether the telephone should be disconnected from the central office supply, and thus powered up by the power supply of the present invention. Preferably, after a specified number of unanswered rings (specified by the computer or the user) has been detected by the ring detect circuit 39, the application program 36 commands the dual pole relay 18 to switch the telephone set connection from the central office to the independent power supply.

Figure 2 also shows various other detector and switching circuits incorporated in the telephone answering system according to a preferred embodiment of the present invention. An off-hook detection switch 38 coupled to the telephone handset 16 indicates whether the telephone handset has been lifted off-hook from the telephone cradle. If a user picks up the telephone handset, the off-hook detection switch 38 closes so that current can be drawn by the handset. For example, if the application program has been installed and the power supply embodiment is connected to the telephone set, the off-hook detection switch may be programmed to close automatically following a predetermined number of unanswered rings detected by the ring detect circuit 39.

Caller ID relay switches 40 and 42, coupled to the modem, allow the user to determine the telephone number of the caller. Referring to Figure 2, the caller ID relay is shown in a deenergized state. If caller identification is desired and commanded through the PC and modem arrangement, the caller ID switches 40 and 42 change position to couple the transformer leg 30 to the voltage/current supply.

In alternate embodiments, other detecting circuits and implementing devices may be incorporated in the telephone set and power supply arrangement to provide additional caller information to the modem and PC, and thus to the user. In further embodiments, additional telephone handsets may be employed and coupled to one or more PC/modem systems to accommodate a variety of telephone operating functions for multiple users. Depending upon the total number of telephone handsets, additional power supplies in accordance with the embodiments discussed herein may be coupled to one or more telephone sets.

In addition, while the illustrated embodiment employs conventional DTMF telephone systems, it will be recognized that further embodiments may be coordinated with other communications devices, such as telephone products relating to electret devices. It will be recognized that as further technological developments and innovations arise, various additional embodiments of the present invention may be implemented to accommodate the improvements and changes in telephone technology and the communications industry.

It will, of course, be understood that other modifications of the present invention, in its various aspects will be apparent to those skilled in the art, some being apparent only after study, and others being matters of routine analog and digital power supply design and fabrication. As such, the scope of the invention should not be limited by the particular embodiments herein described, but should be defined by the appended claims and equivalents thereto.

It should be noted that the objects and advantages of the invention may be attained by means of any compatible combination(s) particularly pointed out in the items of the following summary of the invention and the appended claims.

### The invention may be summarized as follows:

1. A power supply for providing power to a telephone set independent of power supplied by a central office line, the telephone set being operable as a conventional telephone set which receives voice signals, the power supply comprising a current regulator coupled to the telephone set for providing an output current to the telephone set, wherein a voltage is generated across the telephone set, the voltage varying according to the voice signals.
2. The power supply preferably as defined in 1, further comprising switching means for switching the connection of the telephone set between the current regulator and the central office line, wherein when the telephone set is connected to the current regulator, the telephone set is disconnected from the central office.
3. The power supply preferably as defined in 2, wherein the current regulator comprises
   an adjustable voltage regulator having an input terminal, an output terminal, and an adjustment terminal, and
   a resistor connected between the output terminal and the adjustment terminal of the voltage regulator such that a node is formed at the connection of the resistor to the adjustment terminal, wherein when the switching means causes the telephone set to be connected to the current regulator, the telephone set is coupled to the node.
4. The power supply preferably as defined in 3, wherein the variable output current is output from the node to the telephone set.
5. A telephone answering system operable with a telephone set powered by a central office line, wherein the telephone set records and retrieves messages, the telephone answering system comprising:
   a computer coupled to the telephone set for storing the messages;
   a power supply operatively coupled to the telephone set for providing power to the telephone set independent of the central office line power;
   switching means for switching between first and second positions, wherein when the switching means switches to the first position, the telephone set is coupled to the central office line, and when the switching means switches to the second position, the telephone set is coupled to the power supply means,
   wherein when the switching means is in the second position, the telephone set operates as a microphone and speaker into and from which messages may be recorded and retrieved, respectively; and
   means coupled to the computer for controlling the switching means to switch between the first and second positions.
6. The telephone answering system preferably as defined in 5, wherein the messages comprise voice signals.
7. The telephone answering system preferably as defined in 6, wherein the power supply means includes
   a voltage regulator having a plurality of terminals, and
   a resistor coupled to one of the terminals of the voltage regulator, further wherein a constant current is output from one of the plurality of terminals of the voltage regulator and supplied to the telephone set such that the voltage across the telephone set varies according to the voice signals received by the telephone set.
8. The telephone answering system preferably as defined in 5, further comprising a modem coupled between the computer and the telephone set.
9. A telephone answering system operable independent of power provided by a central office line, the telephone answering system comprising:
   a telephone set for sending and receiving telephone calls, and for recording and retrieving messages, wherein the messages comprise voice signals;
   a power supply, operatively coupled to the telephone set, for providing power to the telephone set independent of the central office line power, the power supply means including
   an adjustable voltage regulator having input, output, and adjustment terminals, and
   a resistor coupled to the output and adjustment terminals of the adjustable voltage regulator;
   switching means coupled to the power supply means and the central office line for switching the telephone set connection between the power supply means and the central office;
   a computer coupled to the telephone set for controlling the switching means to switch the telephone set connection from the power supply means to the central office line and from the central office line to the power supply means; and
   a modem coupled to the computer, wherein the messages are recorded and retrieved through the modem and computer assembly, wherein when the telephone set connection is switched by the computer from the central office line to the power supply means, the telephone set operates as a microphone and speaker into which messages may be recorded and retrieved, respectively.
10. The telephone answering system preferably as defined in 9, further comprising a transformer having first and second coils which are electromagnetically linked to transfer electrical energy, the first coil being coupled to the telephone set, the second coil being coupled to the modem, such that the telephone set is coupled to the modem across the linked first and second transformer coils.
11. The telephone answering system preferably as defined in 10, further comprising voice means for inputting voice signals into the telephone set, wherein the resistor and voltage regulator arrangement of the power supply provides a current to the telephone set such that a variable voltage is produced across the telephone set and the first transformer coil, the voltage varying according to the input voice signal.
12. The telephone answering system preferably as defined in 9, further comprising off-hook detection means coupled to the telephone set for indicating that a telephone call is received by the telephone set, such that current is supplied to the telephone set via the power supply means or the central office line.
13. The telephone answering system preferably as defined in 9, further comprising caller identification means coupled to the telephone set for identifying an incoming telephone call.
14. The telephone answering system preferably as defined in 9, wherein the switching means comprises a dual pole relay.
15. The telephone answering system preferably as defined in 9, further comprising ring detect means for detecting telephone calls received by the telephone set.
16. The telephone answering system preferably as defined in 15, wherein, after a predetermined number of rings has been detected by the ring detect means, the program means causes the switching means to connect the telephone set to the power supply means to function as a microphone and speaker independent of the central office line.
17. The telephone answering system preferably as defined in 9, wherein the program means is controlled by a user to cause the switching means to connect the telephone set to the power supply means to function as a microphone and speaker independent of the central office line.
18. In a method for providing a power supply to a telephone set independent of a central office supply in which a voltage regulator, having an input terminal, an output terminal, and an adjustment terminal, is connected to a voltage source, with the voltage source being coupled to the input terminal, the improvement comprising the steps of:
   coupling a resistor between the output terminal and the adjustment terminal of the voltage regulator,
   coupling the telephone set to a node formed by the connection of the resistor and the adjustment terminal of the voltage regulator, and
   providing a current to the telephone set at the node such that the telephone set may operate as a microphone and speaker independent of the central office supply.
19. The method preferably as defined in 18, further comprising the step of coupling switching means between the telephone set and the voltage regulator for switching the telephone set connection between the adjustment terminal of the voltage regulator and the central office supply.
20. The method preferably as defined in 19, the improvement further comprising the step of coupling a modem and computer assembly to the telephone set such that when the telephone set operates as a microphone, messages are recorded by the modem and computer assembly, and when the telephone operates as a speaker, messages are retrieved from the modem and computer assembly.
21. The method preferably as defined in 20, further comprising the step of installing a control means in the computer for commanding the switching means to connect the telephone set to the voltage regulator or to the central office supply.

## Claims

1. A power supply for providing power to a telephone set (16) independent of power supplied by a central office line (14), the telephone set (16) receiving voice signals, the power supply comprising a current regulator (22) coupled to the telephone set (16) for providing a variable output current to the telephone set (16) such that a voltage is generated across the telephone set (16), wherein the voltage varies in accordance with the voice signals.

2. The power supply of claim 1, further comprising switching means (18) for switching the telephone set (16) between the current regulator (22) and the central office line (14), wherein when the telephone set (16) is connected to the current regulator (22), the telephone set (16) is disconnected from the central office line (14).

3. The power supply of claim 2, wherein the current regulator (22) comprises
an adjustable voltage regulator (22) having an input terminal, an output terminal (28), an adjustment terminal (26), and
a resistor (24) connected between the output terminal (28) and the adjustment terminal (26) of the voltage regulator (22) such that a node is formed at the connection of the resistor (24) to the adjustment terminal (26), wherein when the switching means (18) causes the telephone set (16) to be connected to the current regulator (22), the telephone set (16) is coupled to the node.

4. A telephone answering system operable with a telephone set (16) receiving power from a central office line (14), wherein messages can be recorded and retrieved by the telephone set (16), the telephone answering system comprising:
a computer (34) coupled to the telephone set (16) for storing the messages, the messages comprising voice signals, wherein the computer (34) includes an internal power source;
a power supply (12) operatively coupled to the telephone set (16) for providing power to the telephone set (16) independent of the power from the central office line (14), wherein the power supply (12) includes
a voltage regulator (22) having a plurality of terminals, the voltage regulator (22) being configured as a current regulator,
a resistor (24) coupled to one of the terminals of the voltage regulator (22), such that a constant current is output from one of the plurality of terminals of the voltage regulator (22) and supplied to the telephone set (16) to produce a voltage across the telephone set (16) which varies according to the voice signals received by the telephone set (16);
switching means (18) for switching between first and second positions, wherein when the switching means (18) switches to the first position (A), the telephone set (16) is coupled to the central office line (14), and when the switching means (18) switches to the second position (B), the telephone set (16) is coupled to the power supply (12); and
means (36) coupled to the computer for controlling the switching means (18) to switch between the first and second positions,
wherein when the switching means (18) is in the second position, the computer (34) may operate as a microphone or speaker into or from which messages may be recorded or retrieved, respectively.

5. A telephone answering system operable independent of power supplied by a central office line (14), the telephone answering system comprising;
a telephone set (16) for sending and receiving incoming telephone calls from the central office line (14), and for enabling the recording and retrieving of messages, wherein the messages comprise voice signals;
a power supply (12), operatively coupled to the telephone set (16), for providing power to the telephone set (16) independent of the power from the central office line (14), the power supply including
an adjustable voltage regulator (22) having an input terminal, an output terminal (28), and an adjustment terminal (26), the telephone set (16) being coupled between the adjustment terminal (26) and ground, and
a resistor (24) coupled between the output (28) and adjustment (26) terminals of the adjustable voltage regulator (22) such that the voltage regulator (22) is configured as a current regulator;
switching means (18) coupled to the power supply and the central office line (14) for switching the telephone set (16) between the power supply and the central office line (14);
a computer (34) coupled to the telephone set (16) for controlling the switching means (18) and for supplying power to the input terminal of the adjustable voltage regulator (22); and
a modem (20) coupled to the computer (34), wherein the messages are recorded and received through the modem and computer assembly, wherein when the telephone set connection is switched from the central office line to the power supply, the telephone set (16), computer (34) and modem (20) may operate as a microphone or speaker into which messages may be recorded or retrieved, respectively.

6. The telephone answering system of claim 5, further comprising a transformer (31) having first (30) and second (32) coils which are electromagnetically linked to transfer electrical energy, the first coil (30) being coupled to the telephone set (16), the second coil (32) being coupled to the modem (20), such that the telephone set (16) is coupled to the modem (20) across the linked first coil (30) and second coil (32).

7. The telephone answering system of claim 6, further comprising voice means for inputting voice signals into the telephone set (16), wherein the resistor and voltage regulator arrangement of the power supply (12) provides a current to the telephone set (16) such that a variable voltage is produced across the telephone set and the first transformer coil, the voltage varying according to the input voice signal.

8. The telephone answering system of claims 4 and 5, further comprising off-hook detection means (38) coupled to the telephone set (16) for indicating that a telephone call is received by the telephone set (16), such that current is supplied to the telephone set via the power supply means or the central office line (14).

9. The telephone answering system of claim 5, further comprising ring detect means (39) for detecting incoming telephone calls received by the telephone set (16) from the central office line (14).

10. The telephone answering system of claim 9, further comprising program means (36) for causing the switching means (18) to connect the telephone set (16) to the power supply to function as a microphone and speaker independent of the central office line (14) after a predetermined number of rings has been detected by the ring detect means (39).
